## Europäisches Patentamt

## European Patent Office

## Office européen des brevets

(19)

(11) EP 0 707 617 B1

(12) **EUROPÄISCHE PATENTSCHRIFT**

(45) Veröffentlichungstag und Bekanntmachung des Hinweises auf die Patenterteilung:
**09.12.1998 Patentblatt 1998/50**

(21) Anmeldenummer: **94924723.3**

(22) Anmeldetag: **07.07.1994**

(51) Int Cl.⁶: **C09D 11/10**

(86) Internationale Anmeldenummer:
**PCT/EP94/02229**

(87) Internationale Veröffentlichungsnummer:
**WO 95/02017 (19.01.1995 Gazette 1995/04)**

(54) **ANIONISCH BASIERTE WÄSSRIGE DRUCKFARBEN MIT VERBESSERTER DEINKBARKEIT**

ANION-BASED AQUEOUS PRINTING INKS WITH IMPROVED DE-INKING CHARACTERISTICS

ENCRES D'IMPRIMERIE A BASE AQUEUSE ANIONIQUE, A PROPRIETES DE DESENCRAGE AMELIOREES

(84) Benannte Vertragsstaaten:
**AT BE CH DE ES FR GB IT LI NL SE**

(30) Priorität: **09.07.1993 DE 4322999**

(43) Veröffentlichungstag der Anmeldung:
**24.04.1996 Patentblatt 1996/17**

(73) Patentinhaber:
• **Henkel Kommanditgesellschaft auf Akfien**
**40191 Düsseldorf (DE)**
• **Hartmann Druckfarben GmbH**
**D-65527 Niedernhausen/Ts. (DE)**

(72) Erfinder:
• **BECK, Michael**
**D-40591 Düsseldorf (DE)**
• **FISCHER, Herbert**
**D-40229 Düsseldorf (DE)**
• **RITTER, Wolfgang**
**D-42781 Haan (DE)**
• **SCHIEFERSTEIN, Ludwig**
**D-40882 Ratingen (DE)**
• **GRIEBSCH, Udo**
**D-65529 Waldems-Bermbach (DE)**
• **THAI, Quang-Minh**
**D-60326 Frankfurt (DE)**

(74) Vertreter: **von Kreisler, Alek, Dipl.-Chem. et al**
**Patentanwälte,**
**von Kreisler-Selting-Werner,**
**Bahnhofsvorplatz 1 (Deichmannhaus)**
**50667 Köln (DE)**

(56) Entgegenhaltungen:
**EP-A- 0 065 283**      **EP-A- 0 466 409**
**US-A- 4 567 099**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft wasserbasierte Druckfarben, in der einschlägigen Literatur und nachfolgend gelegentlich als Wasserfarben bezeichnet, die insbesondere für den Flexo- und/oder den Tiefdruck geeignet sind und sich durch eine verbesserte Deinkbarkeit auszeichnen. Die Lehre der Erfindung will dabei Druckfarben des angegebenen Typs zur Verfügung stellen, die der Klasse der anionisch basierten wäßrigen Druckfarben zugeordnet werden können.

Der Wiederaufbereitung bedruckter Altpapiere durch Deinken wird zunehmende gewerbliche Bedeutung eingeräumt. Besondere Bedeutung kommt dabei dem Deinken des Altpapiers nach dem Flotationsverfahren zu. Bekannt ist in diesem Zusammenhang, daß sich ölbasierte Druckfarben von Zeitungen, Zeitschriften, Katalogen, Telefonbüchern und dergleichen verhältnismäßig gut deinken lassen. Bekannt ist weiterhin allerdings, daß Drucke aus wäßrigen Flexo- und Tiefdruckfarben im Flotationsverfahren dann schlecht deinkbar sind, wenn die Druckfarben beziehungsweise die darin eingesetzten Bindemittelsysteme anionisch basiert sind. Diese aus einer Mehrzahl von Gründen an sich erwünschten Bindemittelsysteme beziehungsweise Druckfarbentypen führen beim Deinken insbesondere im Flotationsverfahren zu sehr kleinen nicht flotierbaren Farbpartikeln und damit zu nicht akzeptablen Weißgradverlusten des Bedruckstoffes. Um zu hinreichenden Deinking-Ergebnissen zu kommen, mußten entsprechende Altpapierdrucke nach dem sogenannten Waschverfahren deinkt werden. Dieses Verfahren führt jedoch zu hohen Füllstoff- und Kurzfaserverlusten, so daß die Ausbeute an wiederverwertbarer Papiermasse geringer und die Abwasserbelastung deutlich höher ist als beim Flotationsverfahren.

Fachveröffentlichungen auch der jüngsten Vergangenheit bestätigen die hier geschilderten Schwierigkeiten. So wird verwiesen auf die Veröffentlichung W. Förster et al. "Bestandsaufnahme der Deinkbarkeit von bedrucktem Altpapier" in WOCHENBLATT FÜR PAPIERFABRIKATION 8, 1992, 281 - 285. Die Verfasser bestätigen hier ihre schon in früheren Untersuchungen ermittelten Ergebnisse, daß Zeitungen, die im Flexodruckverfahren mit wasserbasierenden Flexodruckfarben hergestellt waren, nur sehr niedrige Deinkbarkeitsmaßzahlen liefern - vgl. a.a.O. Seite 281, Zusammenfassung und Seite 284 zu FlexodruckZeitungen.

Eine vergleichbare Aussage findet sich in der Veröffentlichung H.U. Süss et al. "Das Papier", 55. Jahrgang, Heft 3, 1991, 89 - 96. Hier wird in der Zusammenfassung einleitend ausgeführt, daß Druckfarben auf Wasserbasis beim konventionellen Deinking-Prozeß durch die Flotation nicht abgetrennt werden. Zur Lösung dieses Problems wird eine 2-stufige, alkalisch-saure Flotation schwer entfernbarer Druckfarben aus Altpapier vorgeschlagen. In der Stufe der sauren Flotation sollen als Hilfsmittel quartäre Amine mit mindestens einem langkettigen Alkanrest, beispielsweise Hexadecyl-trimethylammonium-chlorid, mitverwendet werden. Quartäre Ammoniumverbindungen dieser Art zeigen bekanntlich beträchtliche, insbesondere ökologische Mängel. Sie besitzen erhöhte Fischtoxizität und sind nur schwer abbaubar.

Zur Bewältigung des hier angegebenen Problembereiches schlägt die DE-A1 41 15 731 deinkbare Wasserfarben vor, deren wesentliches Kennzeichen in dem Einsatz wasserverdünnbarer kationischer Harze als Bindemittelkomponente liegt. Bevorzugt werden wasserverdünnbare kationische Acrylharze in Dispersionsform als Bindemittel eingesetzt. Die Beispiele dieser zuletzt genannten Literaturstelle zeigen ein Vergleichsbeispiel, in dem tatsächlich im Flotationsverfahren eine wasserbasierte Druckfarbe auf Basis eines anionischen Acrylharzes als Bindemittel (Bedruckstoff Zeitungspapier) zu keiner meßbaren Deinkbarkeit führt.

Die erfindungsgemäße Lehre geht von der Aufgabe aus, anionisch basierte Systeme beziehungsweise entsprechende wasserbasierte Druckfarben aufzuzeigen, die im praktischen Einsatz insbesondere im Flexodruck und/oder Tiefdruck störungsfrei zu guten Druckergebnissen führen, gleichzeitig aber ein bedrucktes Gut ausbilden, das gerade auch im Flotationsverfahren wirkungsvoll deinkbar ist und damit zu hochwertigen Sekundärprodukfen führt.

Gegenstand der Erfindung

Gegenstand der Erfindung sind dementsprechend in einer ersten Ausführungsform wasserbasierte Druckfarben für den Papierdruck, insbesondere den Flexo- und/oder Tiefdruck, enthaltend feindisperse Pigmente und Bindemittel auf Basis synthetischer Polymerverbindungen sowie gewünschtenfalls weitere übliche Hilfsstoffe. Die erfindungsgemäße Lehre ist in dieser Ausführungsform dadurch gekennzeichnet, daß zur Verbesserung der Deinkbarkeit auch im Flotationsverfahren des mit der Wasserfarbe bedruckten Altpapiers als Bindemittel ausgewählte Polymergemische aus

(1) feindispersen wäßrig-basisch unlöslichen Emulsions(co)polymeren (Komponente 1) und in inniger Abmischung damit

(2) wäßrig-basisch löslichen und/oder dispergierbaren (Co)polymer-Verbindungen mit gegenüber (1) niedrigerem Molgewicht (Komponente 2)

vorliegen und dabei diese Polymerkomponenten (1) und (2) durch ihre Glasübergangstemperaturen (Tg) wie folgt gekennzeichnet sind: Tg (1) gleich oder kleiner 0°C und Tg (2) gleich oder größer 0°C, vorzugsweise größer Raumtemperatur.

In einer weiteren Ausführungsform betrifft die Erfindung die Verwendung der ausgewählten Polymergemische aus den zuvor genannten Komponenten (1) und (2) als Bindemittel für feinteilige Pigmente, insbesondere Ruß enthaltende wasserbasierte Druckfarben, die zu auch im Flotationsverfahren gut deinkbaren bedruckten Altpapieren führen.

Einzelheiten zur erfindungsgemäßen Lehre

Die Erfindung geht von der Erkenntnis aus, daß die Auswahl ganz bestimmter und in Form einzelner Vertreter an sich bekannter Bindemitteltypen für die Herstellung wasserbasierter Druckfarben zur technischen Lösung der erfindungsgemäßen Aufgabenstellung führen kann. Die erfindungsgemäß jetzt zur Herstellung auch im 1-stufigen Flotationsverfahren wirkungsvoll deinkbarer bedruckter Altpapiere eingesetzten wasserbasierte Druckfarben kennzeichnen sich durch die Auswahl und Kombination der das Bindemittel bildenden Polymergemische.

Gemäß der Erfindung liegen hier 2 Harz- beziehungsweise Polymertypen in inniger Abmischung miteinander vor, die sich in einer Mehrzahl von Parametern deutlich von einander unterscheiden. Die erste Komponente (1) wird durch feindisperse wäßrig-basisch unlösliche Emulsions(co)polymere gebildet, die sich durch niedrige Glasübergangstemperaturen - im nachfolgendem mit dem Symbol "Tg" bezeichnet - auszeichnen. Die Tg (1) liegt bei oder unterhalb 0°C. Bevorzugt sind als Komponente (1) entsprechende Emulsions(co)polymerverbindungen mit Tg-Werten von -10°C oder darunter, wobei entsprechenden Polymerverbindungen mit deutlich niedrigeren Tg-Werten besondere Bedeutung zukommt. Vergleichsversuche haben gezeigt, daß die Deinkbarkeit des bedruckten Altpapiers - ausgedrückt als Deinkbarkeitsmaßzahl (DEM-%) - um so besser werden kann, je niedriger die Tg (1) gewählt wird. So lassen sich - in Abstimmung mit den anderen Parametern der erfindungsgemäßen Lehre - zunehmend bessere Deinkingsergebnisse erzielen, wenn als Bindemittelkomponente (1) Emulsions(co)polymere mit zunehmend absinkenden Tg-Werten eingesetzt werden, wobei als Stufen beispielsweise -20°C, -25°C, -30°C und -35 bis -40°C genannt werden können. Optimale Ergebnisse im Deinken konnten beispielsweise beim Einsatz von Wasserfarben erzielt werden, die der erfindungsgemäßen Lehre entsprechen und in ihrer Polymerkomponente (1) Tg-Werte im Bereich von -30 bis -35°C aufweisen.

Integraler Bestandteil des Bindemittelsystems der erfindungsgemäßen Wasserfarben sind dabei allerdings die Komponenten zu (2), die als wäßrig-basisch lösliche und/oder dispergierbare Polymerverbindungen - nachfolgend gelegentlich auch als Festharze bezeichnet - mit gegenüber (1) niedrigerem Molgewicht gekennzeichnet sind. Ihre Glasübergangstemperatur Tg (2) unterscheidet sich grundlegend von der Tg (1). Die erfindungsgemäße Lehre fordert als Untergrenze für Tg (2) 0°C und insbesondere Raumtemperatur oder darüber. Bevorzugt liegt Tg (2) bei deutlich höheren Werten und dabei insbesondere bei wenigstens 35°C, vorzugsweise bei 40 bis 50°C oder darüber. Besonders interessante Vertreter für diese Komponente (2) können Tg(2)-Werte im Bereich bis etwa 150°C - gegebenenfalls aber auch noch darüber - aufweisen.

Die Lehre der Erfindung umfaßt dabei sowohl bezüglich der wasserunlöslichen Emulsions(co)polymerkomponente zu (1), wie insbesondere zu der Komponente (2), den Einsatz von Abmischungen von 2 oder auch mehr charakteristischen Vertretern der jeweiligen Stoffklasse im Bindemittelgemisch der erfindungsgemäßen wäßrigen Druckfarben.

Die erfindungsgemäße Kombination der beiden hier beschriebenen Bindemittelkomponenten zu (1) und (2) ermöglicht offensichtlich die technische Bewältigung der vielgestaltigen Problematik, die im Sinne des erfindungsgemäßen Handelns zu berücksichtigen ist. Ohne Anspruch auf Vollständigkeit gilt hier:

Die wäßrige Druckfarbe muß zunächst einmal ja so ausgelegt sein, daß sie bei ihrem Einsatz, beispielsweise im Druck von Zeitungen oder Zeitschriften, den hohen hier gestellten technischen Anforderungen entspricht. Das Druckbild, die Auftrocknung des Druckes und der störungsfreie Betrieb der Druckvorrichtung bei den hier gegebenen hohen Druckgeschwindigkeiten müssen gewährleistet sein. Insbesondere dürfen keine Störungen - beispielsweise durch Ankleben von Resten der Druckfarbe - an den Druckwalzen auftreten. Daß hier besondere Anforderungen für die mit hohen Betriebsgeschwindigkeiten ablaufenden Papierdrucke zu erfüllen sind, ist bekannt. Die sich aus diesen Voraussetzungen ableitenden Schwierigkeiten für das nachfolgende Deinking, insbesondere im Flotationsverfahren sind aus dem zitierten Stand der Technik und insbesondere aus der Veröffentlichung H.U. Süss et al. a.a.O. bekannt und ausführlich dargestellt. Die dort beschriebene Antwort zur Bewältigung dieser Schwierigkeiten sieht die 2-stufige Flotation vor, in der ein mehrstufiges Deinkingverfahren zur Problemlösung vorgeschlagen wird.

Durch die erfindungsgemäße Kombination der zuvor definierten Bindemittelbestandteile zu (1) und (2) im wasserbasierten Druckfarbensystem und durch die Interaktion dieses Bindemittelsystems mit den in den Druckfarben zum Einsatz kommenden feinteiligen feindispersen Pigmenten wird es erstmalig möglich, die unterschiedlichen und sich in gewissem Sinn widersprechenden Parameter des Anforderungsprofils in ihrer Gesamtheit zu erfüllen. Die Leistungsfähigkeit optimierter wäßrig-anionisch basierter Bindemittelsysteme erreicht dabei die kationisch basierten deinkbaren Wasserfarben der zuvor zitierten Literaturstelle, es können sogar bei störungsfreiem Einsatz als Druckfarbe verbesserte Deinking-Ergebnisse bei der Altpapieraufbereitung auch stark gealterter Druckerzeugnisse erhalten werden.

Die Mischungsverhältnisse der Komponenten zu (1) und (2) im erfindungsgemäßen polymeren Bindemittelgemisch können in vergleichsweise breiten Bereichen variiert werden. Naturgemäß ist dabei für den jeweils ausgewählten Harztyp - sowohl bezüglich der wasserunlöslichen Komponente (1) als auch zur wasserlöslichen beziehungsweise wasserdispergierbaren Komponente (2) - unter Berücksichtigung ihrer Interaktion miteinander eine Optimierung der jeweiligen Mischungsverhältnisse möglich und üblicherweise nötig. Allgemein gilt, daß für die Mischungsverhältnisse der Komponenten (1) zu den Komponenten (2) - ausgedrückt im Mengenverhältnis (1) : (2) - der Mischungsbereich von 9 : 1 bis 1 : 2 geeignet sein kann. Vorzugsweise werden entsprechende Mischungsverhältnisse im Bereich von etwa 4 : 1 bis 1 : 1,5 eingesetzt, wobei es besonders zweckmäßig sein kann, entsprechende Mischungsverhältnisse im Bereich von 3 : 1 bis 1 : 1 einzusetzen. Diese Zahlenbereiche zeigen, daß das Emulsions(co)polymere zu (1) mit seinen niedrigen Tg-Werten im allgemeinen die überwiegende Polymerkomponente im erfindungsgemäß eingesetzten Bindemittelgemisch darstellt, wobei etwa mengengleiche Verhältnisse der Komponenten zu (1) und (2) auch noch in bevorzugte Bereiche fallen. Wie zahlenmäßig definiert kann in Sonderfällen aber durchaus auch die vergleichsweise harte Komponente zu (2) der mengenmäßig überwiegende Bestandteil des Bindemittelgemisches sein.

Polymere Bindemittelgemische für den Einsatz im erfindungsgemäßen Sinne beziehungsweise ihre wäßrigen Zubereitungen können in besonders einfacher Weise mittels eines Verfahrens gewonnen werden, das heute großtechnische Bedeutung besitzt. Verwiesen wird in diesem Zusammenhang beispielsweise auf die EP A2 0 257 567. Beschrieben ist hier die an sich bekannte Herstellung von Emulsionscopolymeren, die jetzt jedoch derart abgewandelt wird, daß während eines substantiellen Zeitabschnittes der Emulsions(co)polymerisation in Gegenwart wäßrig-basisch löslicher beziehungsweise dispergierbarer Polymerkomponenten als Stabilisierungshilfe für das entstehende wäßrig-basisch unlösliche Emulsions(co)polymere gearbeitet wird. Diese Technologie kann im Rahmen der Erfindung derartig zum Einsatz kommen, daß das polymere Bindemittelgemisch der erfindungsgemäß beschriebenen Druckfarben das Reaktionsprodukt aus der unter Mitverwendung von emulsionsstabilisierenden Komponenten (2) durchgeführten Emulsions(co)polymerisation zum wasserunlöslichen Polymeren (1) ist.

Gewünschtenfalls können nach Abschluß dieser Verfahrensstufe dem wäßrig-basisch basierten Reaktionsprodukt weitere Anteile an Polymerkomponenten zu (1) und/oder (2) zugesetzt werden. Dabei können gleiche oder - im Vergleich zu den Polymerverbindungen der ersten Verfahrensstufe - unterschiedliche Polymeranteile (1) und/oder (2) zum Einsatz kommen. Besondere Bedeutung können in diesem Zusammenhang wasserbasierte Druckfarben haben, deren Komponente (2) mehrstufig in die wäßrige Farbe eingearbeitet worden ist.

Durch Auswahl und Bestimmung einerseits der entstehenden wasserunlöslichen Emulsions(co)polymeren (1) und andererseits der die Emulsionsbildung unterstützenden und stabilisierenden Komponenten zu (2) ermöglicht die erfindungsgemäße Lehre eine Verwirklichung des geforderten Kompromisses zwischen den zahlreichen und in sich anteilsweise widersprüchlichen Stoffeigenschaften an das Bindemittelsystem der erfindungsgemäßen Druckfarben. Ohne Anspruch auf Vollständigkeit sei zu den Polymerkomponenten (1) und (2) hier das folgende ausgeführt:

Die wasserunlöslichen Emulsions(co)polymeren (1) besitzen in der Regel mittlere Molgewichte (Zahlenmittel Mn) im Bereich von etwa $10^4$ bis $10^6$. Dabei kann der Bereich von etwa $5 \times 10^4$ bis $5 \times 10^5$ besondere Bedeutung haben. Als Ausgangsmonomere beziehungsweise -monomergemische für die Herstellung dieser Bindemittelkomponente werden in der bevorzugten Ausführungsform wenigstens überwiegend solche Monomertypen eingesetzt, die zu den hier geforderten tiefen Tg-Werten führen. Durch dieses Stoffcharakteristikum wird vermutlich dem erfindungsgemäßen Bindemittelsystem die Fähigkeit verliehen, bei der Zubereitung der Wasserfarbe, beim Druck und gegebenenfalls auch bei der Aufbereitung des Altpapiers im Rahmen der Deinkingstufe in einen so innigen Kontakt mit den feindispersen feinteiligen Pigmenten zu treten, daß beim Deinken des Altpapiers ein hinreichender Verbund zwischen Pigmentteilchen und Harzpartikeln besteht und gewährleistet bleibt und damit die Flotation überhaupt erst möglich wird. Als wichtige Monomerkomponenten für die Herstellung dieser Komponente(n) zu (1) sind insbesondere Ester olefinisch ungesättigter Carbonsäuren - insbesondere entsprechender niederer alpha-, beta-ungesättigter Carbonsäuren - mit geradkettigen und/oder verzweigten Alkoholen höherer Kettenlänge zu nennen. Besonders geeignete olefinisch ungesättigte Carbonsäuren sind die Acrylsäure und/oder Methacrylsäure aber auch Dicarbonsäuren wie Maleinsäure beziehungsweise Maleinsäureanhydrid und/oder Fumarsäure. Geeignete Alkohole enthalten beispielsweise bis zu 20 C-Atomen und insbesondere 3 bis 15 C-Atome. Besonders wichtige Vertreter dieser esterbildenden Alkohole sind geradkettige und/oder verzweigte monofunktionelle Alkohole mit 4 bis 10 C-Atomen. Die Polymerkomponente kann dabei in Form ausgewählter Homopolymerer, bevorzugt aber in Form von Copolymeren, ausgebildet sein. Beim Einsatz von beispielsweise n-Butylacrylat, i-Butylacrylat und/oder 2-Ethylhexylacrylat lassen sich im entstehenden (Co)polymer die gewünschten niederen Tg-Werte beispielsweise im Bereich von -20 bis -35°C einstellen. Die Mitverwendung untergeordneter Mengen von Comonomeren, die an sich zu vergleichsweise hohen Tg-Werten im entstehenden Copolymeren führen, ist möglich und gegebenenfalls sogar bevorzugt. Damit gelingt beispielsweise die Steuerung unerwünschter Klebrigkeiten.

Die wäßrig-basisch löslichen und den Emulsionszustand stabilisierenden Komponenten zu (2) sind in den wichtigsten Ausführungsformen durch mittlere Molgewichte (Zahlenmittel Mn) im Bereich von etwa 500 bis 20.000 und vorzugsweise im Bereich von etwa 1.000 bis 10.000 gekennzeichnet. Besonders wichtige Festharze dieser Art haben entsprechende mittlere Molgewichte im Bereich von etwa 1.000 bis 6.000.

Die Auswahl der Monomeren beziehungsweise Monomergemische zur Herstellung dieser löslichen/dispergierbaren Komponenten bestimmt sich durch die geforderten vergleichsweise höheren Tg-Werte dieser Mischungskomponente. Darüber hinaus ist die hinreichende Löslichkeit dieser Polymerkomponente unter wäßrig-basischen Bedingungen sicherzustellen. Durch geeignete, an sich bekannte Auswahl der Monomeren beziehungsweise Monomergemische für diese Komponente ist hier eine weitgehende Steuerung der Stoffeigenschaften dieses Bindemittelanteiles möglich. Als olefinisch ungesättigte Säuren sind insbesondere entsprechende niedere alpha-, beta-olefinisch ungesättigte Säuren wie Acrylsäure und/oder Methacrylsäure aber auch hier wiederum entsprechende olefinisch ungesättigte Dicarbonsäuren, insbesondere Maleinsäure beziehungsweise Maleinsäureanhydrid und/oder Fumarsäure, geeignet. Als Comonomere werden Verbindungstypen eingesetzt, die bekanntermaßen im Polymerzustand zu den gewünschten hohen Tg-Werten, insbesondere im Bereich von etwa 40 bis 150°C führen. Beispiele sind hier die bereits benannten Alkylester niederer Säuren vom Typ (Meth)acrylsäure, insbesondere aber auch Monovinylidenaromaten wie Styrol und Styrolderivate, beispielsweise alpha-Methylstyrol. Beispiele für geeignete Alkylester sind die entsprechenden Methylester, aber auch die Mitverwendung anderer Alkoholreste ist bei geeigneter Steuerung der Tg-Werte hier möglich. So lassen sich beispielsweise auch in dieser Komponente zu (2) unter Mitverwendung von 2-Ethylhexylacrylat als Comonomer Festharze mit Tg-Werten im Bereich von 35 bis 60°C herstellen.

Die Herstellung der wasserbasierten Bindemittelsysteme für die erfindungsgemäßen Druckfarben erfolgt damit zweckmäßigerweise derart, daß in einer getrennten Arbeitsstufe die Komponenten zu (2) hergestellt und mit einer wäßrig-löslichen Base, beispielsweise Ammoniak, gelöst werden. Die Emulsions(co)polymerisation der Monomeren beziehungsweise Monomergemische zur Komponente 1 erfolgt dann wenigstens während eines Anteiles des Zeitraumes der Emulsions(co)polymerisation in der wäßrig-basischen Lösung des Festharzes zu 2. Zu Einzelheiten sei hier noch einmal auf die bereits zitierte EP-A2 0 257 567 verwiesen.

Die deinkbare Druckfarbe der Erfindung enthält dann in wäßriger Zubereitung neben dem erfindungsgemäß definierten Bindemittelsystem anorganische und/oder organische Pigmente, sowie gegebenenfalls übliche weitere Hilfs- und Zusatzstoffe, beispielsweise beschränkte Mengen organischer Lösungsmittel und/oder die Hilfsstoffe aus der Herstellung der Suspensionen beziehungsweise Emulsionen. Geeignete Zusammensetzungen der Wasserfarbe liegen beispielsweise im folgenden Rahmen:

Etwa 5 bis 30 Gew.-%, vorzugsweise etwa 10 bis 20 Gew.-%, eines oder mehrerer anorganischer oder organischer feindisperser Pigmente. Besondere Bedeutung kommt hier feinpartikulärem Ruß zu. Untersuchungen haben gezeigt, daß der speziellen Struktur des eingesetzten Rußes untergeordnete Bedeutung zukommt. Rußpigmente mit Hochstruktur sind prinzipiell ebenso deinkbar wie entsprechende Pigmente mit Niederstruktur. Als Buntpigmente können neben den zur Schönung von Rußen eingesetzten Pigmenten auch andere Buntpigmente des Handels verwendet werden. Auf die Angaben der eingangs genannten DE 41 15 731 wird verwiesen;

Etwa 5 bis 30 Gew.-% (Festkörper), vorzugsweise etwa 10 bis 25 Gew.-% des erfindungsgemäßen Bindemittelsystems aus den Polymerkomponenten zu (1) und (2) mit ihren unterschiedlichen Tg-Werten;

Etwa 40 bis 90 Gew.-% Wasser, bevorzugt wenigstens etwa 50 Gew.-% und insbesondere etwa 50 bis 80 Gew.-% Wasser;

0 bis etwa 25 Gew.-% eines oder mehrerer organischer Lösungsmittel, sowie

0 bis 10 Gew.-% sonstiger Hilfsmittel, beispielsweise Emulgatoren, Lösungsvermittler und dergleichen. Im übrigen wird auch hier auf die Angaben der in der DE 4115 731 benannten Hilfsmittel in üblichen Wasserfarben für den Papierdruck verwiesen. Genannt sind beispielsweise handelsübliche Polyethylenwachse, Entschäumer, Filmbildungshilfsmittel, mineralische Füllstoffe, Dispergierhilfsmittel, Tenside, Neutralisierungsmittel und dergleichen.

Die Deinking-Ergebnisse sind in den nachfolgenden Beispielen mittels der Deinkbarkeits-Maßzahl (DEM-%) angegeben. Diese Maßzahl errechnet sich dabei aus den Reflektionsfaktoren $R_{457nm}$ (Weißgrad) der bedruckten (BS), der deinkten (DS) und der unbedruckten (US) Papierstoffe nach folgender Formel:

$$DEM\,(\%) = \frac{\text{Weißgrad (DS) - Weißgrad (BS)}}{\text{Weißgrad (US) - Weißgrad (BS)}} \times 100$$

(0% bedeutet keine Druckfarbenentfernung, 100% bedeutet quantitative Druckfarbenentfernung)

Die Prüfung zur Kennzeichnung der Deinkbarkeit erfolgte nach der "PTS-Methode 010/87" (Papiertechnische Stiftung München 1987), s. hierzu im einzelnen die eingangs genannte Veröffentlichung W. Förster et al. "Bestandsaufnahme der Deinkbarkeit von bedrucktem Altpapier" in WOCHENBLATT FÜR PAPIERFABRIKATION 8, 1992 und der dort gegebene Literaturhinweis zu 2. (Seite 285).

Zur Bestimmung der Glasübergangstemperaturen aus den nachfolgenden Beispielen gelten die folgenden Angaben:

Die Glasübergangstemperaturen der Polymeren wurden mit dem DSC-Bestimmungsgerät PL DSC Modell 12000 der PL Thermal Sciences durch Leistungsdifferenzmessung im dynamischen Verfahren bei einer Heizrate von 20°/Minute bestimmt (Steuerung über die Interfaceeinheit CCI 3, Modell F 1343 und PC-Auswertung mit der Plus V Software, Version 5.20 der gleichen Firma).

Hierbei wurde entsprechend den DIN 51006, "Thermische Analyse" und DIN 53765, "Thermische Analyse von Polymeren" verfahren, in denen die apparativen Voraussetzungen sowie Einzelheiten von Proben-, Schutzgas- und Gerätevorbereitung beschrieben sind.

Der Glasübergang erfolgt immer über einen mehr oder weniger breiten Temperaturbereich (z.B. zwischen -20°C und -30°C). Als Glasübergangstemperatur Tg wird die Temperatur der sogenannten Halbwertshöhe angegeben. Dazu zieht man in der grafischen Darstellung der Heizleistungsabhängigkeit von der Temperatur die Verlängerung der Basislinie vor und nach dem Glasübergang. Die Glasübergangstemperatur Tg ist dann der Abszissenwert desjenigen Kurvenpunktes, dessen Ordinatenwert von oberer und unterer Basislinienverlängerung gleich weit entfernt liegt.

Zur sicheren Bestimmung der Glasübergangstemperatur sind in der Regel mehrere Messungen und Durchläufe erforderlich.

Bei den untersuchten und im nachfolgenden Beispielsteil angegebenen Dispersionsharzen werden in der Regel ein tieferer Tg-Wert (Tg (1)) und ein hochliegender Tg-Wert (Tg (2)) bestimmt. Ein Sonderfall ist bei dem Handelsprodukt der einen Anmelderin G-Cryl 2000 für Tg (2) gegeben. Hier werden - neben dem tiefliegenden Wert für Tg (1) - für Tg (2) zwei Temperaturwerte oberhalb 0°C bestimmt. Im Falle des zum Vergleich herangezogenen anionischen Dispersionsharzes Joncryl 90 (Firma Johnson) ist kein Wert für Tg (1) bestimmbar.

**Beispiele**

Die Herstellung der wäßrigen Druckfarben erfolgt nach dem Stand der Technik, in dem über hochkonzentrierte Pigmentkonzentrate durch Auflacken mit Bindemitteln und Verdünnen mit Wasser oder auf direktem Wege eine fertige Druckfarbe hergestellt wird.

Als farbgebende Bestandteile können sowohl Russe wie Printex 140 U, Printex 25, 350, 550 (Firma Degussa), als auch organische oder anorganische Buntpigmente eingesetzt werden.

Die Dispergierung wird in der für die Herstellung von Druckfarben üblichen Weise durchgeführt unter Verwendung von Rühraggregaten, Walzenstühlen bzw. Perlmühlen. Unter bestimmten Bedingungen kann sie, wie z.B. bei der Verwendung von Pigmentpresskuchen, entfallen.

Als Hilfsmittel können anionische oder nichtionische Tenside (z.B. Arkopal N90, Firma HOECHST), Netz- und Antischaummittel (Surfynol 104, Firma Air Products), Entschäumer (Byk 80, Firma Bykchemie) oder Tego Foamex 81/1488/1435 (Firma Tego) verwandt werden. Als handelsübliche Wachse dienen Vestowax A 616 SF (Firma Hüls) und Füllstoffe wie Kalziumcarbonat, Silikate oder Titandixoid.

Beispiele 1 bis 3 (gemäß der Erfindung)

Im nachfolgenden sind zunächst lediglich die Rezepturen der jeweiligen Druckfarben angegeben, wobei die auf 100 additierten Zahlenwerte Gewichtsanteile darstellen.

Beispiel 1

| G-Cryl 2000 | 53,8 anionische Dispersion (Fa.Henkel) |
|---|---|
| Printex 550 | 16,0 |
| Surfynol 104 | 0,5 |
| Tego Foamex 1488 | 0,5 |
| Wasser | 29,2 |
| | 100,0 |

Beispiel 2

| Joncryl 80 | 53,0 anionische Dispersion (Fa.Johnson) |
|---|---|
| Printex 140 U | 16,0 |
| Surfynol 104 | 0,5 |
| Tego Foamex 1488 | 0,5 |
| Wasser | 30,0 |
| | 100,0 |

Beispiel 3

| G-Cryl 1200 | 53,0 anionische Dispersion (Fa.Henkel) |
|---|---|
| Printex 140 U | 16,0 |
| Surfynol 104 | 0,5 |
| Tego Foamex 1488 | 0,5 |
| Wasser | 30,0 |
| | 100,0 |

Vergleichsbeispiele 4 und 5

Beispiel 4

| Joncryl 90 | 57,5 anionische Acrylatdispersion Fa. Johnson |
|---|---|
| Printex 350 | 16,0 |
| Tego Foamex 81 | 0,2 |
| Surfynol 104 | 1,0 (Fa. Air Products) |
| Wasser | 25,3 |
| | 100,0 |

Beispiel 5

Zur Herstellung der Druckfarbe wird zunächst ein Firnis gemäß folgender Rezeptur hergestellt:

| Wasser | 57,4 |
|---|---|
| Joncryl 679 | 35,0 anionische Dispersion (Fa.Johnson) |
| $NH_3$(wäßrig 35%ig) | 7,5 |
| Tego Foamex 81 | 0,1 |
| | 100,0 |

Unter Einsatz dieses Firnisses wird eine Druckfarbe gemäß der folgenden Rezeptur hergestellt:

| Firnis | 35,1 |
|---|---|
| Printex 140 U | 16,0 |
| Wasser | 48,8 |
| Tego Foamex 1488 | 0,1 |
| | 100,0 |

Mit den Druckfarben der erfindungsgemäßen Beispiele 1 - 3 und der Vergleichsbeispiele 4 und 5 wird Zeitungspapier als Druckträger bedruckt. Die beim Deinken erhaltenen Ergebnisse - DEM (%) und DS (%) - sind in der nachfolgenden Tabelle zusammengefaßt und in Beziehung gesetzt zu den am jeweiligen Bindemitteltyp bestimmten Werten zu Tg (1) und Tg (2). Die Tabelle 1 zeigt: Die erfindungsgemäßen Beispiele 1 bis 3 liefern hohe Deinkbarkeitsmaßzahlen (DEM-%). Die in der Bindemittelbeschaffenheit nicht der erfindungsgemäßen Definition entsprechenden Typen aus den Vergleichsbeispielen 4 und 5 liefern deutlich schlechtere Deinkingergebnisse.

Tabelle 1

| Beispiel | Polymer | Pigment | DEM (%) | DS (%) | Tg (1) °C | Tg (2) °C |
|---|---|---|---|---|---|---|
| 1 | G-Cryl 2000 | Printex 550 | 80,9 | 57,7 | -35 | 65;150 |
| 2 | Joncryl 80 | Printex 140 U | 81,9 | 59,1 | -30 | 150 |
| 3 | G-Cryl 1200 | Printex 140 U | 79,3 | 57,4 | -35 | 140 |
| 4 | Joncryl 90 | Printex 350 | 39,4 | 42,6 | * | 110 |
| 5 | Joncryl 679 | Printex 140 U | 37,3 | 43,5 | 70 | 140 |

* = kein Wert bestimmbar

In weiteren Untersuchungen werden Druckfarben gemäß den vorherigen Angaben unter Einsatz der folgenden polymeren Bindemittel hergestellt: Joncryl 8051 (Fa. Johnson), Lucidene 141, Lucidene 605 und Lucidene 610 (anionische Dispersionsharze Fa. Morton).

Die nachfolgende Tabelle 2 faßt die Polymertypen, die Deinkbarkeitsmaßzahl und die Werte für Tg (1) und Tg (2) zusammen:

Tabelle 2

| Polymer | DEM (%) | Tg (1) °C | Tg (2) °C |
|---|---|---|---|
| Joncryl 8051 | 70,5 | -30 | 135 |
| Lucidene 605 | 81 | -25 | 145 |
| Lucidene 610 | 68 | - 5 | 150 |
| Lucidene 141 | 55 | * | 100 |

* = kein Wert bestimmbar

In einer weiteren Versuchsserie wird das im Rahmen des Beispiels 1 eingesetzte anionische Dispersionsharz G-Cryl 2000 (Firma Henkel) dahingehend abgewandelt, daß - bei Beibehaltung der wäßrig-basisch unlöslichen Harzkomponente (1) - die wäßrig-basisch lösliche beziehungsweise dispergierbare Komponente zu (2) gegen entsprechende Festharzkomponenten mit vergleichsweise niedrigerem Tg(2)-Wert ausgetauscht wird.

Die hier als Harzkomponente (2) eingesetzten Festharze sind Copolymere auf Basis Styrol/alpha-Methylstyrol/ Acrylsäure/2-Ethylhexylacrylat mit den nachfolgenden Tg(2)-Werten: "Festharz A" Tg(2) = 65°C; "Festharz B" Tg(2) 40°C. Die nachfolgende Tabelle 3 faßt die Polymertypen, die Deinkbarkeitsmaßzahl und die Werte für Tg(1) und Tg (2) zusammen.

Tabelle 3

| Polymer auf Basis | DEM (%) | Tg (1) °C | Tg (2) °C |
|---|---|---|---|
| Festharz A | 93,0 | 140-150 | 65 |
| Festharz B | 96,9 | 140-150 | 40 |

Interessant ist, daß sich bei der visuellen Beurteilung des deinkten Materials in den beiden zuletzt genannten Fällen ein leichter Gelbstich - trotz Mitverwendung von Bleichmittel - ergibt, wie es bei gut deinkbaren Farben allgemein der Fall ist.

**Patentansprüche**

1. Wasserbasierte Druckfarben für den Papierdruck, insbesondere Flexo- und/oder Tiefdruck, enthaltend feindisperse Pigmente und Bindemittel auf Basis synthetischer Polymerverbindungen, sowie gewünschtenfalls weitere übliche Hilfsstoffe, dadurch gekennzeichnet, daß zur Verbesserung der Deinkbarkeit auch im Flotationsverfahren des mit der Farbe bedruckten Altpapiers als Bindemittel ausgewählte Polymergemische aus

(1) feindispersen wäßrig-basisch unlöslichen Emulsions(co)polymeren (Komponente 1) und in inniger Abmischung damit

EP 0 707 617 B1

(2) wäßrig-basisch löslichen und/oder dispergierbaren (Co)polymeren mit gegenüber (1) niedrigerem Molgewicht (Komponente 2)

vorliegen und dabei diese Polymerkomponenten durch ihre Glasübergangstemperaturen (Tg) wie folgt gekennzeichnet sind: Tg (1) gleich oder kleiner als 0°C und Tg (2) gleich oder größer 0°C.

2. Druckfarbe nach Anspruch 1, dadurch gekennzeichnet, daß die Komponente (1) einen Tg-Wert gleich oder kleiner als -10°C, vorzugsweise gleich oder kleiner als -20°C und insbesondere im Bereich von -25 bis -30°C und darunter besitzt.

3. Druckfarbe nach Ansprüchen 1 und 2, dadurch gekennzeichnet, daß die Komponente (2) einen Tg-Wert gleich oder oberhalb Raumtemperatur, bevorzugt von wenigstens 35°C, und insbesondere im Bereich von 40°C und darüber aufweist.

4. Druckfarbe nach Ansprüchen 1 bis 3, dadurch gekennzeichnet, daß das polymere Bindemittelgemisch die Komponenten (1) und (2) in Mischungsverhältnissen (Komponente (1) : Komponente (2)) von 9 : 1 bis 1 : 2, vorzugsweise im Bereich von etwa 4 : 1 bis 1 : 1,5 enthält, wobei Mischungsverhältnisse von 3 : 1 bis 1 : 1 besonders bevorzugt sein können.

5. Druckfarbe nach Ansprüchen 1 bis 4, dadurch gekennzeichnet, daß die Komponente (2) mittlere Molgewichte (Zahlenmittel Mn) im Bereich von 500 bis 20.000, vorzugsweise im Bereich von etwa 1.000 bis 6.000 aufweist.

6. Druckfarbe nach Ansprüchen 1 bis 5, dadurch gekennzeichnet, daß das polymere Bindemittelgemisch das Reaktionsprodukt aus der unter Mitverwendung von emulsionsstabilisierenden Komponenten (2) durchgeführten Emulsions(co)polymerisation zum wasserunlöslichen Polymeren (1) ist, dem gewünschtenfalls weitere Anteile an Komponenten (2) zugesetzt worden sind.

7. Druckfarbe nach Ansprüchen 1 bis 6, dadurch gekennzeichnet, daß die Emulsions(co)polymeren (1) mittlere Molgewichte (Zahlenmittel Mn) im Bereich von etwa $10^4$ bis $10^6$, insbesondere im Bereich von etwa $5 \times 10^4$ bis $5 \times 10^5$ aufweisen.

8. Druckfarbe nach Ansprüchen 1 bis 7, dadurch gekennzeichnet, daß ihr Gehalt an polymerem Bindemittelgemisch und Pigmenten, insbesondere Ruß, jeweils etwa 5 bis 25 Gew.-% - bezogen auf druckfertige Wasserfarbe - vorzugsweise jeweils etwa 10 bis 20 Gew.-% beträgt und zum Rest Wasser und in untergeordneter Menge übliche Hilfsstoffe vorliegen.

9. Druckfarbe nach Ansprüchen 1 bis 8, dadurch gekennzeichnet, daß die wäßrig-basisch unlöslichen Emulsions (co)polymeren (1) wenigstens anteilsweise, bevorzugt zum wenigstens überwiegenden Anteil aus Estern olefinisch ungesättigter niederer Carbonsäuren mit geradkettigen und/oder verzweigten Alkoholen mit 3 bis 15 C-Atomen, vorzugsweise mit 4 bis 10 C-Atomen als Monomerbausteine aufgebaut sind.

10. Druckfarbe nach Ansprüchen 1 bis 9, dadurch gekennzeichnet, daß die Komponenten (2) als Monomerbausteine neben bevorzugt niederen olefinisch ungesättigten Carbonsäuren Styrol, Styrolderivate und/oder niedere Ester niederer olefinisch ungesättigter Säuren aufweisen.

11. Verwendung ausgewählter Polymergemische aus

(1) in wäßrigem Alkali unlöslichen feindispersen Emulsions(co)polymeren (Komponente 1), die in inniger Abmischung mit

(2) in wäßrigem Alkali löslichen (Co)polymeren mit gegenüber (1) niedrigerem Molgewicht vorliegen (Komponente 2)

und dabei bezüglich ihrer Komponenten (1) und (2) die nachfolgenden Glasübergangstemperaturen (Tg) aufweisen: Tg (1) gleich oder kleiner 0°C und Tg (2) gleich oder größer 0°C, bevorzugt wenigstens Raumtemperatur, als Bindemittel für feinteilige Pigmente, insbesondere Ruß, enthaltende wasserbasierte Druckfarben, die zu auch im Flotationsverfahren gut deinkbaren bedruckten Altpapieren führen.

9

**12.** Ausführungsform nach Anspruch 11, dadurch gekennzeichnet, daß Bindemittel vom Typ wasserbasierter anionischer Acrylharze verwendet werden, deren disperse Komponente (1) in Gegenwart wenigstens eines Anteils der wasserlöslichen Komponente (2) hergestellt worden ist.

**13.** Ausführungsform nach Ansprüchen 11 und 12, dadurch gekennzeichnet, daß Bindemittelgemische verwendet werden, deren (Co)polymeranteil (1) einen Tg von -10°C oder darunter, vorzugsweise von -25°C und darunter, aufweisen.

**14.** Ausführungsform nach Ansprüchen 11 bis 13, dadurch gekennzeichnet, daß Bindemittelgemische verwendet werden, deren Komponente(n) (2) einen Tg oberhalb 35°C, zum Beispiel im Bereich von 40 bis 150°C besitzen.

**Claims**

**1.** Water-based printing inks for paper printing, in particular flexographic and/or intaglio printing, containing finely dispersed pigments and binders based on synthetic polymer compounds as well as further usual additives, if desired, characterized in that selected polymer mixtures of

(1) finely dispersed, aqueous-basic insoluble emulsion (to)polymers (component 1) in intimate admixture with

(2) aqueous-basic soluble and/or dispersible (to)polymer compounds with lower molecular weights than that of (1) (component 2)

are present as the binders for improving deinkability even in the flotation method involving waste paper printed with said ink, said polymer components being characterized by their glass transition temperatures ($T_g$) as follows: $T_g$ (1) is equal to or less than 0°C and $T_g$ (2) is equal to or higher than 0°C.

**2.** The printing ink according to claim 1, characterized in that component (1) has a $T_g$ which is equal to or less than -10°C, preferably equal to or less than -20°C, especially ranging from -25 to -30°C or below.

**3.** The printing ink according to claims 1 and 2, characterized in that component (2) has a $T_g$ which is equal to or higher than room temperature, preferably at least 35°C, especially in the range of 40°C and above.

**4.** The printing ink according to claims 1 to 3, characterized in that the polymeric binder composition contains components (1) and (2) in mixing ratios of component (1) to component (2) of from 9:1 to 1:2, preferably in the range of from about 4:1 to 1:1.5, while mixing ratios of from 3:1 to 1:1 may be particularly preferred.

**5.** The printing ink according to claims 1 to 4, characterized in that component (2) has an average molecular weight (number average $M_n$) in the range of from 500 to 20,000, preferably in the range of from about 1,000 to 6,000.

**6.** The printing ink according to claims 1 to 5, characterized in that the polymeric binder composition is the reaction product of the emulsion (to)polymerization performed with the addition of emulsion-stabilizing components (2) to give the water-insoluble polymer (1) to which further proportions of components (2) have optionally been added.

**7.** The printing ink according to claims 1 to 6, characterized in that said emulsion (to)polymers (1) have average molecular weights (number average $M_n$) in the range of from about $10^4$ to $10^6$, especially in the range of from about $5 \times 10^4$ to $5 \times 10^5$.

**8.** The printing ink according to claims 1 to 7, characterized in that its contents of polymeric binder composition and pigments, especially carbon black, are each from about 5 to 25% by weight, based on ready-to-print aqueous ink, preferably from about 10 to 20% by weight, the balance being water and minor amounts of usual additives.

**9.** The printing ink according to claims 1 to 8, characterized in that said aqueous-basic insoluble emulsion (to)polymers (1) are composed, at least in part, preferably at least predominantly, of esters of olefinically unsaturated lower carboxylic acids with straight and/or branched chain alcohols containing from 3 to 15 carbon atoms, preferably from 4 to 10 carbon atoms, as the constituent monomers.

**10.** The printing ink according to claims 1 to 9, characterized in that said components (2) comprise styrene, styrene derivatives and/or lower esters of lower olefinically unsaturated acids as constituent monomers in addition to preferably lower olefinically unsaturated carboxylic acids.

11. Use of selected polymer mixtures of

(1) aqueous alkaline insoluble, finely dispersed emulsion (to)polymers (component 1) in intimate admixture with

(2) aqueous alkaline soluble (to)polymers with lower molecular weights than that of (1) (component 2)

exhibiting the following glass transition temperatures ($T_g$) of components (1) and (2): $T_g$ (1) is equal to or less than 0°C and $T_g$ (2) is equal to or higher than 0°C, preferably at least room temperature, as binders for water-based printing inks containing finely divided pigments, especially carbon black, which will result in printed waste papers which are readily deinkable even in the flotation method.

12. The use according to claim 11, characterized in that binders of the water-based anionic acrylic resin type are used whose disperse component (1) has been prepared in the presence of at least part of said water-soluble component (2).

13. The use according to claims 11 and 12, characterized in that binder compositions are used whose (to)polymer component (1) has a $T_g$ of -10°C or below, preferably -25°C and below.

14. The use according to claims 11 to 13, characterized in that binder compositions are used whose component(s) (2) has a $T_g$ of above 35°C, for instance, in the range of from 40 to 150°C.


**Revendications**

1. Couleurs d'impression basées sur de l'eau, pour l'impression du papier, en particulier l'impression flexographique et/ou l'héliogravure qui contiennent des pigments finement dispersés et un agent liant à base de composés polymères synthétiques ainsi que, si désiré, d'autres substances auxiliaires usuelles,
   caractérisées en ce que
   pour l'amélioration de l'aptitude au désencrage également dans un procédé par flottation des vieux papiers imprimés avec la couleur, des mélanges de polymères sélectionnés comme agents liants, à base de

   (1) (co)polymères en émulsion insolubles en milieu basique aqueux finement dispersés (composant 1) et en mélange intime avec ceux-ci,
   (2) (co)polymères solubles et/ou susceptibles d'être dispersés en milieu basique aqueux avec un poids molaire plus bas par rapport à (1) (composant 2),

   sont présents et ainsi ces composants polymères sont caractérisés par leurs températures de transition vitreuse (Tg) de la manière suivante : Tg(1) égal ou plus petit que 0°C, et Tg(2) égal ou plus grand que 0°C.

2. Couleur d'impression selon la revendication 1,
   caractérisée en ce que
   le composant (1) possède une valeur de (Tg) égale ou plus petite que -10°C, de préférence égale ou plus petite que -20°C et en particulier dans la plage de -25°C à -30°C et en dessous.

3. Couleur d'impression selon les revendications 1 et 2,
   caractérisée en ce que
   le composant (2) possède une valeur de (Tg) égale ou au-dessus de la température ambiante, de préférence d'au moins 35°C et en particulier dans la plage de 40°C et au-dessus.

4. Couleur d'impression selon les revendications 1 à 3,
   caractérisée en ce que
   le mélange d'agents liants polymères renferme les composants (1) et (2) dans des rapports de mélange (composant (1) : composant (2)) allant de 9:1 à 1:2, de préférence dans la zone d'environ 4:1 à 1:1,5, dans lequel des rapports de mélange de 3:1 à 1:1, peuvent être particulièrement préférés.

**5.** Couleur d'impression selon les revendications 1 à 4,
caractérisée en ce que
le composant (2) possède des poids molaires moyens (moyenne numérique Mn) dans la zone de 500 à 20 000, de préférence dans la zone allant d'environ 1000 à 6000.

**6.** Couleur d'impression selon les revendications 1 à 5,
caractérisée en ce que
le mélange d'agents liants polymères est le produit de réaction provenant d'une (co)polymérisacion en émulsion effectuée en utilisant conjointement des composants qui stabilisent les émulsions en polymères (1) insolubles dans l'eau auquel, si désiré, d'autres quantités de composant (2) ont été ajoutées.

**7.** Couleur d'impression selon les revendications 1 à 6,
caractérisée en ce que
les (co)polymères en émulsion (1) possèdent des poids molaires moyens (moyenne numérique Mn) dans la plage d'environ $10^4$ à $10^6$, en particulier dans la plage d'environ $5 \times 10^4$ à $5 \times 10^5$.

**8.** Couleur d'impression selon les revendications 1 à 7,
caractérisée en ce que
sa teneur en mélange d'agents liants polymères et en pigments - en particulier du noir de fumée - s'élève respectivement à environ 5 à 25 % en poids - rapporté à la couleur à l'eau prête à l'impression - de préférence respectivement environ 10 à 20 % en poids et en ce que comme reste d'eau et en quantités inférieures des agents auxiliaires usuels sont présents.

**9.** Couleur d'impression selon les revendications 1 à 8,
caractérisée en ce que
les (co)polymères en émulsion insoluble en milieu aqueux basique (1) sont constitués au moins partiellement - de préférence au moins en quantité prépondérante - en des esters d'acide carboxylique inférieur non saturé oléfiniquement, avec des alcools à chaîne droite et/ou ramifiée ayant de 3 à 15 atomes de carbone, de préférence ayant de 4 à 10 atomes de carbone, comme éléments de construction monomères.

**10.** Couleur d'impression selon les revendications 1 à 9,
caractérisée en ce que
les composants (2) possèdent comme éléments de construction monomères, de préférence à côté des acides carboxyliques non saturés oléfiniquement inférieurs du styrène, des dérivés du styrène et/ou des esters inférieurs d'acide inférieur non saturé oléfiniquement.

**11.** Utilisation de mélanges de polymères sélectionnés à base de :

(1) (co)polymères en émulsion finement dispersés, insolubles dans l'alcali aqueux (composant 1) qui se présentent en mélange intime avec
(2) des (co)polymères solubles dans un alcali aqueux ayant un poids molaire plus bas par rapport à (1)

et pour cela, en ce qui concerne leurs composants (1) et (2), possèdent les températures de transition vitreuse (Tg) subséquentes : Tg(1) égal ou plus petit que 0°C et Tg(2) égal ou plus grand que O°C, de préférence au moins la température ambiante, en tant qu'agent liant pour des pigments finement divisés, en particulier du noir de fumée, contenant des couleurs d'impression basées sur l'eau, qui conduisent à des vieux papiers imprimés bien désencrables, même dans un procédé par flottation.

**12.** Mode d'exécution selon la revendication 11,
caractérisé en ce qu'
on utilise des agents liants du type des résines acryliques anioniques basées sur l'eau dont les composants (1) dispersés ont été préparés en présence d'au moins une quantité de composant soluble dans l'eau (2).

**13.** Mode d'exécution selon les revendications 11 et 12,
caractérisé en ce qu'
on utilise des mélanges d'agents liants dont la fraction de (co)polymère (1) possède un (Tg) de -10°C ou en dessous, de préférence de -25°C et en dessous.

**14.** Mode d'exécution selon les revendications 11 à 13,
caractérisé en ce qu'
on utilise des mélanges d'agents liants dont le(s) composant(s) (2) possèdent un (Tg) au-dessus de 35°C, par exemple dans la plage de 40 à 150°C.